# EUROPÄISCHE PATENTSCHRIFT

(11) **EP 3 422 542 B1**
(45) Veröffentlichungstag und Bekanntmachung des Hinweises auf die Patenterteilung: **29.04.2026**
(21) Anmeldenummer: 18000544.9
(22) Anmeldetag: 20.06.2018
(51) Int. Cl.: H02K 3/47, H02K 16/02, H02K 21/12, H02K 21/14, H02K 21/22

(54) **DREHFELDMASCHINE**
ROTATING FIELD MACHINE
MACHINE À CHAMP TOURNANT

(30) Priorität: 30.06.2017 DE 102017006194
(43) Veröffentlichungstag der Anmeldung: 02.01.2019
(73) Patentinhaber: WILO SE, 44263 Dortmund (DE)
(72) Erfinder: Drubel, Oliver, 44263 Dortmund (DE); Schmülling, Stefan, 44263 Dortmund (DE); Dreihaus, Uwe, 44263 Dortmund (DE)
(74) Vertreter: Cohausz Hannig Borkowski Wißgott

(56) Entgegenhaltungen:
- EP-A1- 0 680 133
- EP-A1- 2 701 290
- EP-B1- 3 791 464
- WO-A1-2015/104795
- WO-A1-2016/035358
- WO-A2-2010/036747
- AT-A1- 511 659
- DE-A1- 4 042 432
- DE-U1- 202015 006 632
- JP-A- 2004 096 874
- KR-A- 20160 066 756
- US-A1- 2002 047 418
- US-A1- 2012 299 405
- ANONYMOUS: "Luftspule - Wikipedia", 28 March 2015 (2015-03-28), pages 1 - 2, XP093235118, Retrieved from the Internet <URL:https://web.archive.org/web/20150328223045/http://de.wikipedia.org/wiki/Luftspule> [retrieved on 20241217]

## Beschreibung

Die Erfindung betrifft eine dreiphasige Drehfeldmaschine mit den Merkmalen des Oberbegriffs des Anspruchs 1.

Drehfeldmaschinen dieses Typs sind hinlänglich bekannt. Beispielsweise besitzen Synchronmaschinen den gattungsgemäßen Aufbau, wie die amerikanische Patentanmeldung US 2002/0047418 A1 zeigt. Ähnliche Drehfeldmaschinen offenbaren die japanische Patentanmeldung JP 2004 096874 A und die internationale Anmeldung WO 2015/104795 A1.

Bei Drehfeldmaschinen mit sogenannten Schleifenentwicklungen, liegen die Wicklungen einer Phase in je zwei sich annähernd diametral gegenüberliegenden achsparallelen Nuten am Umfang des Stators. Dabei liegt ein erster Abschnitt einer Wicklung in einer ersten Nut und verläuft in dieser zu einem ersten axialen Ende bzw. einer Stirnseite des Stators, wo die Wicklung dann bezogen auf den Statorquerschnitt parallel zu einer Sekante verlaufend in eine zweite Nut eintritt, in der ein zweiter Abschnitt einer Wicklung zu dem gegenüberliegenden anderen axialen Ende des Stators verläuft. Die axialen Stirnseiten des Stators bilden somit sogenannte Wickelköpfe, wobei die Wicklungen an einer der Stirnseiten nicht nur von einer Nut kommend in die nächste Nut eintretend verlaufen, sondern in diesem Bereich auch elektrisch verschaltet sind. Dieser Aufbau der Wicklungen lässt sich in einen elektromagnetisch aktiven Bereich und einen inaktiven Bereich unterteilen.

Im Längsschnitt betrachtet, umfasst der aktive Bereich denjenigen Teil der

Wicklungen, der in den Nuten liegt, wobei auch der Radialspalt und die Permanentmagnete zu dem aktiven Bereich zählen. Demgegenüber bilden die Wicklungsabschnitte an den axialen Stirnseiten des Stators, d.h. die Wickelköpfe den inaktiven Bereich, da sie nicht drehmomenterzeugend mit dem Drehfeld im Radialspalt wechselwirken. Die Länge dieser stirnseitigen Wicklungsabschnitte ist, wie zuvor erläutert, dadurch bedingt, dass der elektrische Leiter an zwei verschiedenen Maschinenpolen vorwärts und rückwärts gebracht werden muss. Die Wicklungsabschnitte im Bereich der Wickelköpfe erzeugen deshalb bis zu 50 % aller Kupferverluste des Stators.

Darüber hinaus wird der Rotor bei größeren permanentmagnetischen Maschinen nicht genutzt, um einen Beitrag für das elektromagnetische Drehmoment zu liefern, weil der Luftspalt zu weit entfernt ist. Selbst bei nicht-magnetischen Rotoren, beispielsweise von Asynchronmaschinen mit einer größeren Anzahl an Polen, ist der Rotor nicht ausreichend genutzt, weil der Durchmesser der Bohrung vergrößert werden muss, um eine höhere Leistung zu erlauben.

Aus der deutschen Gebrauchsmusterschrift DE 20 2015 006 632 U1 ist ein Koaxialgenerator für eine Turbine bekannt, umfassend ein äußeres und ein inneres permanentmagnetisches Rotorelement (Magnetwelle und Magnetarray), zwischen denen eine Baugruppe mit Spulensegmenten in Form U-förmiger Haarnadeln angeordnet ist, die einen zylindrischen Spulenträger umgreifen und mit axialen Enden samt Spulenträger in eine Ringplatine gesteckt sind, die die einzelnen Spulensegmenten elektrisch miteinander verbindet.

Eine elektronisch kommutierte Gleichstrommaschine mit einer Spulenanordnung aus in Umfangsrichtung gewickelten Spulen ist aus der europäischen Patentanmeldung EP 0 680 133 A1 bekannt. Eine ähnliche Konstruktion einer elektronisch kommutierten Gleichstrommaschine mit einer Statoranordnung, die mäanderförmig sich in Umfangsrichtung erstreckende Abschnitte aus Flachblech besitzt, offenbart die deutsche Offenlegungsschrift DE 40 42 432 A1.

Elektrische Maschinen mit einem äußeren und einem inneren Rotorelement und einer zwischen diesen liegenden Statoranordnung sind außerdem aus der internationalen Anmeldung WO 2016/035358 A1 und der europäischen Patentanmeldung EP 2 701 290 A1 bekannt.

Es ist Aufgabe der vorliegenden Erfindung, eine dreiphasige Drehfeldmaschine bereitzustellen, die geringere Kupferverluste besitzt, so dass ihr Wirkungsgrad und ihre Leistungsdichte gegenüber herkömmlichen Drehfeldmaschinen erhöht ist.

Diese Aufgabe wird durch die Drehfeldmaschine mit den Merkmalen des Anspruchs 1 gelöst. Vorteilhafte Weiterbildungen sind in den Unteransprüchen angegeben.

Erfindungsgemäß wird vorgeschlagen, dass der Rotor ein zum ersten Rotorelement konzentrisch und radial weiter außen liegendes zweites ringförmiges, insbesondere zylindrisches Rotorelement mit Permanentmagneten aufweist, welches drehfest mit dem ersten Rotorelement verbunden ist und zu welchem der Stator unter Ausbildung eines zweiten Luftspalts beabstandet ist, und dass sich ein erster Abschnitt einer Windung der Wicklungen im ersten Luftspalt in eine axiale Richtung erstreckt und im weiteren Verlauf stirnseitig des Stators in einen radial zum ersten Abschnitt versetzten zweiten Abschnitt der Windung übergeht, der sich im zweiten Luftspalt in entgegengesetzte axiale Richtung erstreckt. Der Übergang des ersten Abschnitts in den zweiten Abschnitt erfolgt somit innerhalb eines Wickelkopfbereichs.

Ein Kernaspekt der Erfindung besteht in dem Aufbau der Maschine, bei dem Stator und Rotor ineinander geschachtelt sind. Durch diesen Aufbau wird erreicht, dass die Länge der stirnseitigen Windungsabschnitte gegenüber der herkömmlichen Bauform deutlich reduziert ist, da die Windungen der einzelnen Wicklungen nicht mehr von einem Umfangspunkt des Stators diametral oder gesehnt zu einem anderen Umfangspunkt geführt werden müssen. Somit wird der inaktive Bereich der Wicklungen verringert. Gleichzeitig werden die Kupferverluste reduziert. Dabei gehört ein größerer Anteil der Wicklungen zum aktiven Bereich und nimmt an der elektromagnetischen Drehmomenterzeugung aktiv Teil. Der Wirkungsgrad und die Leistungsdichte werden dadurch bei im Wesentlichen gleicher Baugröße (Länge und Durchmesser des Stators) der Maschine erhöht.

Der erfindungsgemäße Maschinenaufbau besitzt zwei magnetisch aktive Luftspalte, nämlich den radial außen und den radial innen liegenden Luftspalt, die beide an der Drehmomenterzeugung mitwirken, während im Stand der Technik nur ein Luftspalt üblich ist und sich die Magnetfeldlinien über den magnetisch passive, Rückschlussring (Joch) schließen. In gewisser Weise kann das zweite Rotorelement als Rückschlussring betrachtet werden, der hier jedoch zusammen mit dem Rotor rotiert, so dass es keine Ummagnetisierungsverluste gibt.

Die Windungen können annährend in Radialebenen liegen, d.h., dass der erste und zweite Abschnitt bezogen auf die Motorachse im Wesentlichen im gleichen azimutalen Winkel angeordnet sind. Es ist aber auch möglich, dass der erste und zweite Abschnitt in verschiedenen azimutalen Winkeln liegen, d.h. bezogen auf den radialen Maschinenquerschnitt auf einer Sehne der Maschine liegen. Des Weiteren können die Abschnitte im Wesentlichen parallel zur Motorachse verlaufen, aber durchaus auch geschrägt zu dieser liegen.

Die beiden Rotorelemente sind erfindungsgemäß ringförmig und umgeben den ebenfalls ringförmigen Stator somit radial außenseitig und radial innenseitig über den gesamten Umfang. Hinsichtlich der axialen Querschnittsgeometrie ergeben sich für die Bauform der Rotorelemente sowie des Stators theoretisch mehrere Möglichkeiten. Vorzugsweise weist der Stator eine kreisrunde oder ovale Querschnittsform auf, wobei die beiden Rotorelemente im Querschnitt betrachtet derart ineinander übergehen, dass der erste und zweite Luftspalt bogenförmig in einen gemeinsamen axialen Luftspalt übergehen. Zum Beispiel kann der Stator einen runden Querschnitt aufweisen, so dass seine Form einem Torus entspricht, wobei dann das innen liegende erste Rotorelement einen im Querschnitt konkaven Außenumfang, das außenliegende zweite Rotorelement einen im Querschnitt konkaven Innenumfang besitzen. Um jedoch Rotor und Stator einfach axial ineinander fügen zu können, ist eine rechteckige Querschnittsgeometrie sinnvoll. Es ist daher von Vorteil, wenn das erste Rotorelement, das zweite Rotorelement und der Stator im axialen Querschnitt zylindrisch ausgebildet sind. Die axiale Länge kann dabei beliebig gewählt werden, entsprechend dem gewünschten Drehmoment, das der Motor erzeugen soll.

Gemäß einer Ausführungsvariante weist der Rotor in axialer Richtung vor der Stirnseite des Stators zusätzliche Permanentmagnete auf. Dies hat den Vorteil, dass auch die im Wickelkopfbereich liegenden Windungsabschnitte in einem Magnetfeld liegen und somit zu einer Drehmomenterzeugung beitragen. Diese zusätzlichen Permanentmagneten sind geeigneterweise ebenfalls ringförmig angeordnet. Ihre Magnetisierung ist axial.

Die Wicklungen sind gemäß einer ersten erfindungsgemäßen Alternative auf eine ringförmige Stützstruktur gewickelt. Dies hat den Vorteil, dass für die Herstellung der Wicklungen der erfindungsgemäßen Drehfeldmaschine der üblicherweise zum Bewickeln von Spulen und Transformatoren verwendete Runddraht verwendet werden kann, der mit 0,2mm bis 1,5mm Durchmesser vergleichsweise dünn ist. Entsprechend der Querschnittsgeometrie der Rotorelemente kann die Stützstruktur ebenfalls zylindrisch sein bzw. einen Hohlzylinder bilden.

In der ersten Alternative besteht die Stützstruktur aus einem unmagnetischen Material, beispielsweise aus Kunststoff. Die Wicklungen sind somit eisenlos und bilden zwischen den beiden Rotorelementen Luftspaltwicklungen. Dies hat den Vorteil, dass weder Ummagnetisierungsverluste noch Eisenverluste vorliegen. Der Wirkungsgrad wird dadurch weiter gesteigert. Zudem gibt es keine Rastmomente, wodurch ein gleichmäßigerer Lauf und eine höhere Laufruhe erreicht wird. Es kann keine Eisensättigung erreicht werden und die Induktivität des Stators ist geringer.

Vorzugsweise ist das Material der Stützstruktur para- oder diamagnetisch. Es beeinflusst die Magnetfeldlinien somit nicht, so dass sich der magnetische Kreis sich gegenüberliegender Magnetpole über die beiden Rotorelemente schließt. In dieser Ausführungsvariante sind die sich einander gegenüberliegenden Magnetpole entgegengesetzt magnetisiert. So liegt beispielsweise im ersten Spalt ein Nordpol der inneren Permanentmagnete und radial weiter außen ein Südpol der äußeren Permanentmagnete oder im ersten Spalt ein Südpol der inneren Permanentmagnete und radial weiter außen ein Nordpol der äußeren Permanentmagnete.

Die Stützstruktur ist massiv, d.h. nicht hohl ausgebildet, so dass mechanische Stabilität für den Bewicklungsprozess erreicht wird. Die Stützstruktur kann in der massiven Ausbildung auch als Kern betrachtet werden.

Vorzugsweise ist die Stützstruktur aus einem massiven Kern gebildet, wobei die

Wicklungen in Nuten des Kerns, die zum ersten und/ oder zweiten Luftspalt gerichtet sind. Somit können Nuten an der radialen Außenseite, an der radialen Innenseite oder an der Außen- und Innenseite der Stützstruktur vorhanden sind.

Gemäß einer anderen Ausführungsvariante kann die zum ersten und/ oder die zum zweiten Rotorelement gerichtete Oberfläche der Stützstruktur nutenartig geformt und aus isolierendem Material gebildet sein. Jede Nut ist dabei radial offen und bildet ein Führungselement für den Wicklungsdraht, der bevorzugt ein Runddraht ist. Dies ist eine Stützwirkung. Hierdurch wird der Fluss besser genutzt und die höhere Leistungsdichte erlaubt eine Realisierung von Luftspaltwicklungen bei größeren Leistungen als beim heutigen Stand der Technik.

Gemäß einer zweiten erfindungsgemäßen Alternative sind die Wicklungen selbsttragend, so dass keine Stützstruktur benötigt wird. Die mechanische Stabilität ist durch die Wicklungen selbst gewährleistet. Hierdurch wird die Herstellung der Drehfeldmaschine erheblich vereinfacht. Die Wicklungen sind somit auch in dieser Alternative kernlos, insbesondere eisenlos und bilden somit reine Luftspaltwicklungen.

Zur Ausbildung der selbsttragenden Wicklungen kann beispielsweise ein Flachdraht verwendet werden, der aufgrund er Dicke und Breite formstabil oder biegesteif ist. Dabei ist der Flachdraht sinnvollerweise so gewickelt, dass seine Flachseiten in Umfangsrichtung gerichtet sind. Die einzelnen Windungen einer Wicklung bilden dann quasi ein einzelnes Blech, von denen dann gemäß der Anzahl an Windungen der Wicklungen entsprechend viele Bleche die Wicklung bildend in Umfangsrichtung nebeneinanderliegen.

Eine alternative Möglichkeit, eine selbsttragende Wicklung herzustellen, besteht darin, einen Wicklungsdraht zu verbacken, beispielsweise mit Hilfe eines Lacks oder Harzes, mit dem der Wicklungsdraht getränkt wird. Der Wicklungsdraht kann hier ein üblicher Runddraht sein, der im Gegensatz zum Flachdraht nicht formstabil oder biegesteif ist.

Von Vorteil ist es, wenn die Wicklungen, insbesondere der Flachdraht, aus einem ferromagnetischen Material wie Eisen oder Stahl bestehen, da hierdurch ein höherer magnetischer Fluss in den beiden Luftspalten erzeugt und der Wirkungsgrad der Maschine erhöht wird. Dabei kann in Kauf genommen werden, dass das ferromagnetische Material einen höheren ohmschen Widerstand aufweist, als beispielsweise Kupfer. Allerdings ist dies im Wickelkopfbereich nachteilig, weil die hier liegenden, im Wesentlichen senkrecht zu den Luftspalten (im Wesentlichen radial) verlaufenden Windungsabschnitte keinen Beitrag zur Drehmomenterzeugung leisten, jedenfalls sofern nicht die zuvor genannten zusätzlichen Permanentmagnete axial vor dem Stator angeordnet werden.

Um diesen Nachteil zu verbessern kann vorgesehen sein, dass die stirnseitig des Stators liegenden Windungsabschnitte aus einem elektrisch besser leitenden Material bestehen, als der erste und zweite Windungsabschnitt. Eine Windung besteht somit gemäß dieser Weiterbildung aus zwei unterschiedlichen elektrisch leitenden Materialien. Damit wird erreicht, dass die stirnseitigen, den Wickelkopf bildenden Windungsabschnitte einen geringeren ohmschen Widerstand haben und somit weniger ohmsche Verluste erzeugen. Die Windungsabschnitte im Wickelkopfbereich werden aus elektrisch gut leitendem Material wie beispielsweise Kupfer hergestellt.

Um einen festen Halt der Permanentmagnete bei der Drehung des Rotors zu gewährleisten, können die Permanentmagnete innerhalb des ersten und/ oder zweiten Rotorelements vergraben sein. Sie sind dementsprechend nicht als Oberflächenmagnete ausgebildet.

Die Permanentmagnete sind im ersten und/ oder zweiten Rotorelement so angeordnet und magnetisiert, dass der magnetische Fluss im ersten und zweiten Luftspalt im Wesentlichen radial verläuft. Ferner liegt sowohl bei dem ersten Rotorelement als auch bei dem zweiten Rotorelement in Umfangsrichtung abwechselnd ein Nord- und Südpol vor. Vorzugsweise liegen sich die Magnetpole des ersten und zweiten Rotorelements im selben azimutalen Winkel gegenüber.

Bei den Alternativen der erfindungsgemäßen Drehfeldmaschine ohne ferromagnetischem Kern, d.h. bei der Alternative "Luftspaltwicklung" mit einer unmagnetischen Stützstruktur und bei der Alternative mit selbsttragenden Wicklungen, ist es sinnvoll, wenn die Flussrichtung der Magnetpole im ersten und zweiten Luftspalt radial in die gleiche Richtung zeigt. Bei sich gegenüberliegenden Magnetpolen sind diese also gleichgerichtet magnetisiert. Somit schließen sich die Magnetfeldlinien nur über die beiden Rotorelemente, d.h. nicht im Luftspalt bzw. nicht zwischen den Rotorelementen. Dies bewirkt eine größere Flussdichte in den Luftspalten, welche bei einer Drehfeldmaschine ohne ferromagnetischem Kern aus Sicht des magnetischen Feldes wie ein einziger Luftspalt wirken.

Erfindungsgemäß sind der erste und zweite Windungsabschnitt azimutal zueinander versetzt. Dies bedeutet, dass in Umfangsrichtung betrachtet, der sich in die eine axiale Richtung hin erstreckende erste Windungsabschnitt in einem Umfangswinkel versetzt zu dem sich in die entgegengesetzte axiale Richtung zurück erstreckende zweite Windungsabschnitt liegt. Im Fachjargon wird dies auch als Schrittverkürzung bezeichnet. Infolge der unterschiedlichen azimutalen Winkellage des ersten und zweiten Windungsabschnitts überlappen sich Windungen unmittelbar benachbarter Wicklungen. Hierdurch können Oberwellen unterdrückt werden.

Sinnvollerweise liegen die Windungen derselben Wicklung in mehreren Lagen übereinander. Bevorzugt können dabei die Windungen benachbarter Wicklungen in unterschiedlichen Lagen derart versetzt zueinander liegen, dass sich die benachbarten Wicklungen in Umfangsrichtung überlappen. Dies hilft ebenfalls, Oberwellen zu unterdrücken.

Gemäß einer Ausführungsvariante sind das erste und zweite Rotorelement drehfest mit einer Welle oder einer drehbaren Komponente einer angetriebenen Lastmaschine oder einer antreibenden Turbine verbunden. Im Falle eines motorischen Betriebs wird somit das durch das Magnetfeld erzeugte Drehmoment unmittelbar auf die Welle oder sonstige Komponente übertragen bzw. im Falle eines generatorischen Betriebs wird die Drehbewegung direkt auf die Rotorelemente übertragen.

Geeigneterweise kann die drehfeste Verbindung der beiden Rotorelemente zueinander derart realisiert sein, dass das erste Rotorelemente unmittelbar auf einer Welle und das zweite Rotorelement an einer mit der Welle drehfest verbundenen Rotorscheibe befestigt ist. Alternativ können das erste und/ oder das zweite Rotorelement an einer Rotorscheibe befestigt sein. Diese kann drehfest mit einer Welle verbunden sein.

Vorteilhafterweise kann die Rotorscheibe Teil eines Pumpenlaufrads, beispielsweise die Tragscheibe eines Pumpenlaufrads sein. Somit bilden das Laufrad und der permanentmagnetische Rotor oder zumindest das zweite Rotorelement mit dem Laufrad baulich eine Einheit.

Gemäß einer Ausführungsvariante ist die Stützstruktur mittels Halteelementen fest an einem stationären, insbesondere scheibenförmigen Trägerelement gehalten. Die Halteelemente dienen zudem als Abstandshalter für den zwischen dem Trägerelement und der Stützstruktur liegenden Wickelkopf, der notwendigerweise Platz benötigt. Ebendieser Raumbedarf ist zwischen dem Trägerelement und der Stützstruktur samt Wicklungen durch die Halteelemente vorgesehen. Zweckmäßig ist es, wenn die Enden der einzelnen Wicklungen zum Trägerelement geführt sind, beispielsweise axial, so dass am oder vor dem Trägerelement die Verschaltung der Wicklungen vorgenommen werden kann. Vorzugsweise kann das Trägerelement hierzu sogleich als Verschaltungskappe dienen, d.h. selbst die elektrischen Verbindungen zum Verschalten der Wicklungen tragen.

Gemäß einer Ausführungsvariante können der innere und der äußere Spalt unterschiedliche Spaltbreiten besitzen. Dies ermöglicht es, einen im Querschnitt rechteckigen Wicklungsdraht am äußeren Durchmesser der Stützstruktur bzw. seitens des zweiten Luftspalts mehr tangential (Seitenflächen liegen gegenüber Radius gekippt, so dass die radiale Aufbauhöhe des Wicklungsdrahts geringer ist, als die Breite des Wicklungsdrahtes), während der Wicklungsdraht am Innendurchmesser der Stützstruktur, d.h. seitens des ersten Spalts mehr radial verlegt sein kann (Seitenflächen liegen etwa in einem Radius, so dass die radiale Aufbauhöhe des Wicklungsdrahts der Breite des Wicklungsdrahtes entspricht). Denn im äußeren Spalt ist der Umlaufazimuthal länger. Daher hat man hier Platz den Draht zu kippen, der im inneren Durchmesser fehlt. Der Vorteil liegt darin, dass der äußere Luftspalt verkleinert und damit höhere Flußdichten erreicht werden können. Vorzugsweise kann die erfindungsgemäße Drehfeldmaschine ein Antriebsmotor sein, insbesondere zum Antreiben einer Kreiselpumpe.

Zum besseren Verständnis wird die Erfindung nachfolgend anhand einer Drehfeldmaschine erläutert, die jedoch aufgrund des Materials einer darin verwendeten Stützstruktur und der relativen Position des ersten und zweiten Windungsabschnitts nicht selbst Teil der Erfindung ist. Es zeigen:
- Fig. 1:: eine perspektivische Ansicht einer Drehfeldmaschine ohne Statorhalterung
- Fig. 2:: eine Darstellung der Drehfeldmaschine im axialen Längsschnitt ohne Statorhalterung
- Fig. 3:: eine perspektivische Ansicht der Drehfeldmaschine mit Statorhalterung
- Fig. 4:: ein Ausschnitt eines radialen Querschnitts der Drehfeldmaschine
- Fig. 5:: eine Darstellung der oberen Hälfte der Drehfeldmaschine im axialen Längsschnitt ohne Statorhalterung

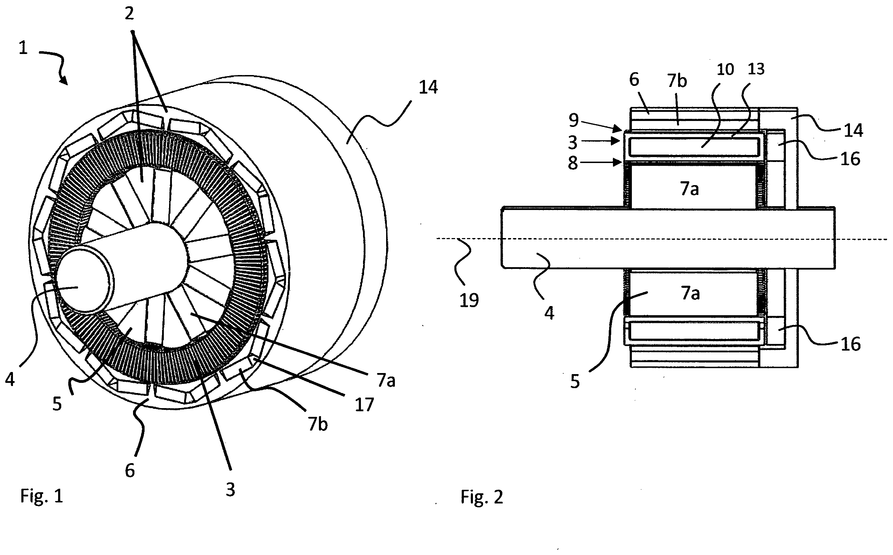

Die Figuren 1 bis 4 zeigen eine dreiphasige Drehfeldmaschine 1 in Gestalt eines Antriebsmotors mit einem Stator 3 und einem Rotor 2, der ein erstes ringförmiges Rotorelement 5 mit Permanentmagneten 7a und ein zu diesem konzentrisch und radial weiter außenliegendes zweites ringförmiges Rotorelement 6 mit Permanentmagneten 7b aufweist, welches drehfest mit dem ersten Rotorelement 5 verbunden aufweist. Der Stator 3 umfasst Wicklungen 11, 12, 13, die jeweils einer von drei Phasen eines Drehstromsystems zugeordnet sind und die sich in Umfangsrichtung des Stators 3 zyklisch wiederholen. Zwischen dem ersten, inneren, und dem zweiten, äußeren Rotorelement 5, 6 liegt ein radialer Luftspalt, der durch den Stator 2 mit seinen Wicklungen 11, 12, 13 in zwei Einzelspalte 8, 9 unterteilt ist. So besteht zwischen dem Stator 3 und dem ersten Rotorelement 5 ein erster radialer Luftspalt 8 sowie zwischen dem Stator 3 und dem zweiten Rotorelement 6 ein zweiter radialer Luftspalt 9, wie dies in den Fig. 2, 4 und 5 erkennbar ist. Insgesamt wird dadurch eine geschachtelte Struktur von Rotor 2 und Stator 3 erreicht.

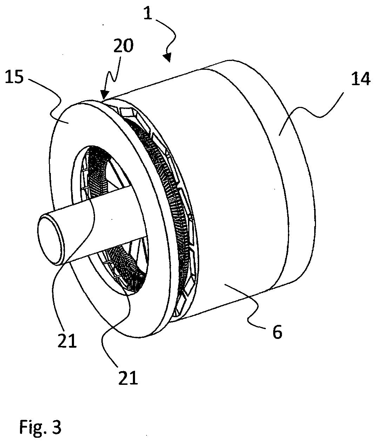

In Fig. 1 ist die Drehfeldmaschine 1 ohne Statorhalterung gezeigt, die in Fig. 3 in Gestalt eines scheibenförmigen Trägerelement 15 vor der axialen Stirnseite des Stators 3 liegt. Die Permanentmagnete 7a des ersten Rotorelements 5 sind quaderförmig, wobei sie mit ihrer Breitenerstreckung in radialer Richtung von der Welle 4 abstehend in einem Blechpaket einliegen, das den jeweiligen Raumbereich zwischen zwei benachbarten Permanentmagneten 7a ausfüllt. Die Permanentmagnete 7b des zweiten Rotorelements 6 sind ebenfalls quaderförmig, liegen jedoch mit ihrer Breitenerstreckung annährend jeweils in Tangentialebenen des Stator 3. Je zwei Permanentmagnete 7b bilden ein Paar, das V-förmig in einer entsprechend V-förmigen Tasche 17 einliegt, die in einem Blechpaket ausgebildet sind. Die Permanentmagnete 7b des zweiten Rotorelements 6 sind somit vergraben. Zusammen bilden die Permanentmagnete 7b eine ringförmige Anordnung im zweiten Rotorelement 6.

Auf der in Fig. 1 hinteren Seite der Drehfeldmaschine ist eine Rotorscheibe 14 zu sehen, mit der das zweite Rotorelement 6 fest verbunden ist, und die gleichzeitig drehfest mit der Motorwelle 4 verbunden ist, welche zudem das erste Rotorelement 5 drehfest trägt. Somit liegen das erste und das zweite Rotorelement 5, 6 zueinander in einem festen Winkel.

Des Weiteren zeigt Fig. 1 die stirnseitigen Windungsabschnitte der äußersten Windungen der einzelnen Wicklungen 11, 12, 13, die jeweils aus mehreren gewickelten Lagen bestehen, wobei die weiteren Lagen unter den Sichtbaren liegen. Diese Windungsabschnitte verlaufen hier jeweils annährend radial. Die Wicklungen 11, 12, 13 können hier beispielsweise aus Flachdraht hergestellt sein. Die beiden Wicklungsenden jeder Wicklung sind in der Darstellung ebenfalls nicht gezeigt, stehen jedoch axial aus dem Stator 3 hervor.

Fig. 2 verdeutlicht den geschachtelten Aufbau von Rotor 2 und Stator 3 anhand eines Längsschnitts, wobei die Schnittebene durch die Motorachse 19 und die Permanentmagnete 7a des ersten Rotorelement 5 verläuft aber leicht gekippt zur radialen Symmetrieachse der Permanentmagnete 7a liegt, so dass auch die Permanentmagnete 7b im zweiten Rotorelement 6 geschnitten sind. Man erkennt, dass die ringförmigen Rotorelemente 5, 6 und der ringförmige Stator 3 jeweils einen rechteckigen Querschnitt aufweisen, d.h. durch konzentrische Hohlzylinder gebildet sind.

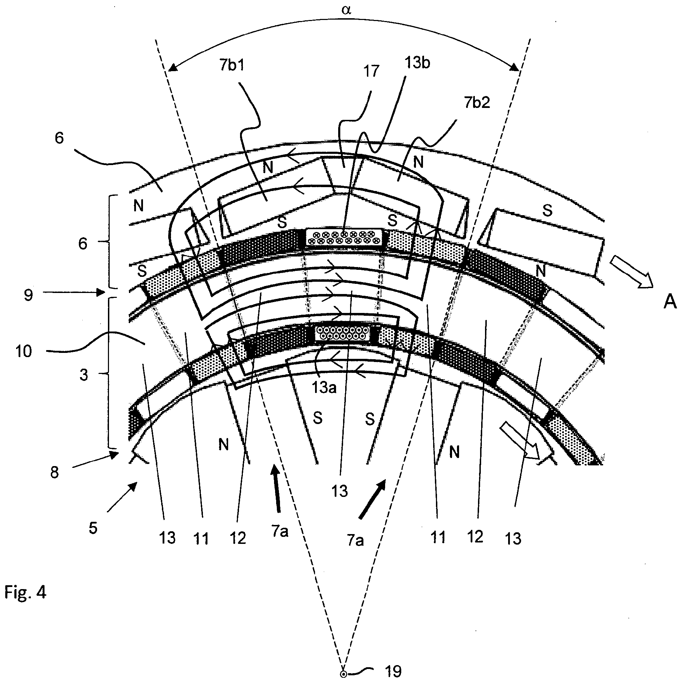

Der Stator 3 umfasst eine ringförmige, hier ebenfalls im Querschnitt rechteckige Stützstruktur 10 aus einem ferromagnetischen Material, beispielsweise Eisen, auf die die Wicklungen direkt gewickelt sind, so dass sich ein erster Abschnitt 13a einer Windung der Wicklungen 13 im ersten Luftspalt 8 in eine axiale Richtung erstreckt und stirnseitig des Stators 3 im weiteren Verlauf in einen zweiten Abschnitt 13b der Windung übergeht, der sich im zweiten Luftspalt 9 in entgegengesetzte axiale Richtung erstreckt. Der Strom in einer Windung fließt somit in dem einen Luftspalt hin und in dem anderen Luftspalt zurück. Das Wicklungsprinzip ist in Fig. 4 näher erkennbar und wird nachstehend noch weiter beschrieben. Die Stützstruktur 10 bildet hier einen nutenlosen Kern des Stators 3.

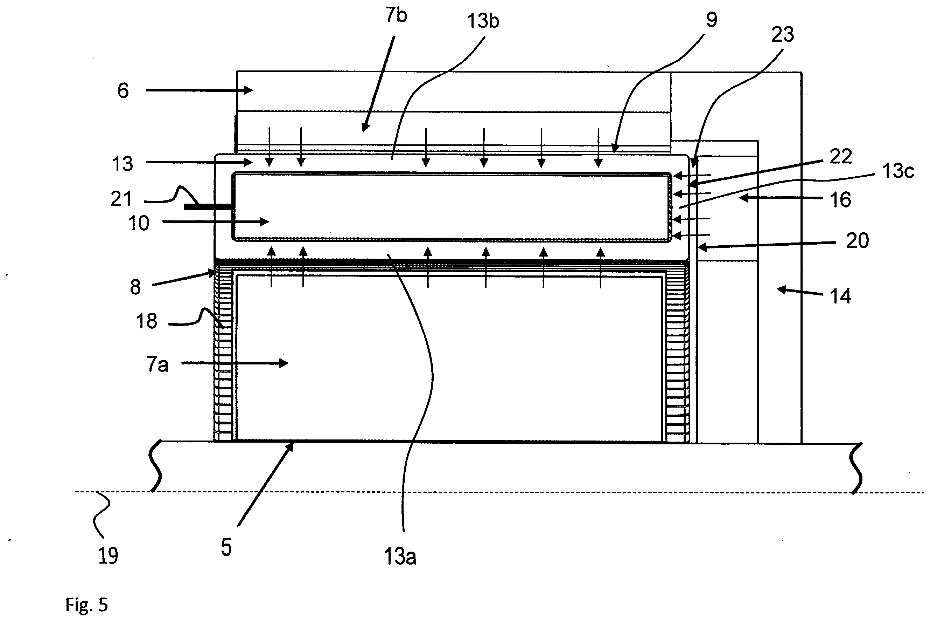

Der Rotor 2 umfasst zusätzliche Permanentmagnete 16, die unter Bildung eines Axialspalts 23 axial vor der Stirnseite des Stators 3 angebracht sind, so dass auch die stirnseitigen stromdurchflossenen Windungsabschnitte in einem Magnetfeld, vor allen senkrecht zu diesem liegen und somit mit zur Drehmomenterzeugung beitragen. Die Magnetisierung dieser Axialmagnete 16 ist entsprechend axial. Der Axialspalt 23 umfasst ferner einen Wickelkopfbereich 20 bzw. nimmt räumlich einen Wickelkopf 22 des Stators 3 auf, wie anhand von Fig. 5 besser zu erkennen ist.

Fig. 3 zeigt die Drehfeldmaschine 1 mit dem bereits angesprochenen Trägerelement 15, an dem der Stator 3 mit seinen Wicklungen 11, 12, 13 befestigt ist. Die Befestigung erfolgt mittels Halterungen 21, die hier in Gestalt runder, stiftartiger Stege ausgebildet sind und sich parallel zur Motorachse 19 erstrecken. An einem Ende sind die Halterungen an der Stützstruktur 10, am anderen Ende am Trägerelement 15 befestigt, beispielsweise durch eine Schweißverbindung oder mittels Schrauben. Alternativ können die Halterungen 21 auch durch flache Stege gebildet sein. Die Halterungen 21 sind äquidistant über den Umfang verteilt. Sie definieren den Abstand zwischen dem scheibenförmigen Trägerelement 15 und der Stützstruktur 10, wobei innerhalb dieses Abstandes ein Wickelkopfbereich 20 liegt, wobei bei diesem Wickelkopfbereich auch die Verschaltung der Wicklungen erfolgt. Nicht dargestellt, sind die Wicklungsenden der Wicklungen, die ebenfalls an dieser Seite miteinander elektrisch verschaltet sind.

Fig. 4 zeigt einen Ausschnitt eines vergrößerten radialen Querschnitts der Drehfeldmaschine 1, Fig. 5 einen entsprechenden Längsschnitt. Die Figuren verdeutlichen, wie die einzelnen Wicklungen 11, 12, 13 auf die Oberfläche der Stützstruktur 10 in Gestalt eines nutenlosen Eisenkerns gewickelt sind. Sie bilden somit Luftspaltwicklungen. Alternativ kann die Stützstruktur 10 Nuten aufweisen, in denen die einzelnen Wicklungen einliegen. Der Stator 3 umfasst somit die Wicklungen 11, 12, 13 und die Stützstruktur 10. Jede Wicklung 11, 12, 13 erstreckt sich über einen Umfangswinkel von einem Drittel der Polteilung α, so dass jeder Polteilung α bzw. jedem Magnetpol je eine Wicklung 11, 12, 13 einer der drei Spannungsphasen zugeordnet ist. In Fig. 4 sind die drei Wicklungen durch unterschiedliche Schraffuren bzw. fehlende Schraffur gekennzeichnet. So gehört eine erste Wicklung 11 mit einer hellen Schraffur zu der ersten Phase, eine zweite Wicklung 12 mit einer dunklen Schraffur zu einer zweiten Phase und eine dritte Wicklung 13 mit einer fehlenden Schraffur zu der dritten Phase. Diese drei Phasenwicklungen 11, 12, 13 liegen nebeneinander auf der Stützstruktur 10 und wiederholen sich in Umfangsrichtung des Stators 3 zyklisch, so dass sich an die dritte Phasenwicklung wieder eine der ersten Phase zugeordnete Phasenwicklung anschließt.

Das erste Rotorelement 5 umfasst 10 quaderförmige Permanentmagnete 7a, die äquidistant über den Umfang verteilt sind und sich mit ihrer Länge in axialer Richtung und mit ihrer Breite in radialer Richtung erstrecken. Die Dicke liegt entsprechend parallel zu einer Tangente an den Umfang. Die Bereiche des Rotorelements 5 zwischen den Permanentmagneten 7a sind jeweils in Form eines Tortenstücks ausgebildet, so dass der Außenumfang des ersten Rotorelements 5 insgesamt blumenförmig ist. Damit variiert die Breite des ersten Luftspalts 8 über dem Umfang, wobei die Breite mittig der Permanentmagnete 7a am größten, und mittig der Zwischenbereiche am kleinsten ist. Diese an sich bekannte Rotorform trägt zur Verringerung des Rastmoments bei.

Im zweiten Rotorelement 6 sind die V-förmigen Taschen 17 gut sichtbar, in die axial die quaderförmigen Permanentmagnete 7b eingeschoben sind. Dabei liegt je ein Permanentmagnet 7b1, 7b2 in einem Schenkel einer der V-förmigen Taschen 17 ein, so dass sie sich mit ihrer Länge in axialer Richtung und mit ihrer Breite parallel zu einer Tangente an den Umfang erstrecken. Die Dicke liegt auf einer Sehne, d.h. ist gegenüber dem Radius etwas verkippt. Die Taschen 17 sind ebenfalls äquidistant über den Umfang verteilt, wobei sich eine ringförmige Anordnung der Permanentmagnete ergibt.

Im ersten Rotorelement 5 sind zehn Permanentmagnete 7a, im zweiten Rotorelement 6 zwanzig Permanentmagnete 7b angeordnet, wobei hier jedoch je zwei zur selben Tasche 17 gehörenden Permanentmagnete 7b1, 7b2 ein Paar bilden. Sie sind identisch in Richtung ihrer Dicke magnetisiert, so dass sie gemeinsam im zweiten Rotorelement 6 einen äußeren Magnetpol bilden, dessen Flussrichtung den zweiten Luftspalt 9 im Wesentlichen radial durchsetzt. In Fig. 4 ist die Magnetisierung durch die Buchstaben N für Nordpol und S für Südpol angegeben. In Umgangsrichtung wechselt die Magnetisierung von Paar 7b1, 7b2 zu Paar 7b1, 7b2, so dass abwechselnd ein Nord- und Südpol im zweiten Luftspalt 9 über dem Umfang vorliegt. Insgesamt liegen also auch hier zehn äußere Magnetpole vor.

Im ersten Rotorelement 5 ist die Magnetisierung der dortigen Permanentmagnete 7a ebenfalls in Richtung ihrer Dicke, wobei die Magnetisierung hier von Permanentmagnet 7a zu Permanentmagnet 7a wechselt, so dass stets gleichartige Pole zueinander gerichtet sind, deren Fluss in den jeweils gemeinsamen Zwischenbereich des ersten Rotorelements 5 eingekoppelt wird, welcher diesen dann über seinen Außenumfang in den ersten Spalt 8 leitet. Somit bilden diese Zwischenbereiche jeweils einen inneren Magnetpol aus, dessen Flussrichtung den ersten Luftspalt 9 im Wesentlichen radial durchsetzt. Jeder innere Magnetpol wird somit anteilig durch die beiden benachbarten Permanentmagnete 7a erzeugt. In Umgangsrichtung liegt dadurch ebenfalls abwechselnd ein Nord- und Südpol im ersten Luftspalt 8 vor. Das erste und das zweite Rotorelement 5, 6 sind derart zueinander drehfest angeordnet, dass je ein Zwischenbereich symmetrisch einem Permanentmagnetpaar 7b1, 7b2 gegenüberliegt.

Insgesamt ist die dargestellte Drehfeldmaschine 1 folglich 10-polig, d.h. mit p=5 Polpaaren ausgebildet. Entsprechend beträgt eine Polteilung 360°/2p 36°. Eine Wicklung 11, 12, 13 erstreckt sich somit über einen Umfangswinkel von 12°. Es sei angemerkt, dass im Sinne der Erfindung eine beliebige andere Polzahl bzw. Polpaarzahl möglich ist. Die aus der Magnetisierung folgende Flussrichtung der Magnetfeldlinien sind in Fig. 4 ebenfalls eingezeichnet. Es wird deutlich, dass sich die Feldlinien des äußeren und inneren Magnetpols jeweils über den Eisenkern 10 schließen.

In Fig. 4 sind zudem bei der dritten Phasenwicklung 13 rein zur Veranschaulichung ein paar der einzelnen Windungen dargestellt, von die jeweils einen ersten, radial innenliegenden Windungsabschnitt 13a und einen zweiten, radial außenliegenden Windungsabschnitt 13b umfassen. Der erste Windungsabschnitt 13a liegt im ersten Luftspalt 8, der zweite Windungsabschnitt 13b im zweiten Luftspalt 9. Der Wicklungsdraht ist hier im Unterschied zu Fig. 1 und 3 beispielhaft als Runddraht ausgeführt. Der erster Abschnitt 13a der Windung erstreckt sich in eine axiale Richtung und geht stirnseitig des Eisenkerns 10 im weiteren Verlauf in den zweiten Abschnitt 13b der Windung über, der sich in entgegengesetzte axiale Richtung erstreckt. Somit liegen die beiden Windungsabschnitte 13a, 13b im selben azimutalen Winkel.

Stirnseitig des Eisenkerns 10 sind die beiden Windungsabschnitte 13a, 13b durch einen dritten Windungsabschnitt 13c miteinander verbunden, siehe Fig. 5. Die Gesamtheit aller dritten Windungsabschnitte bildet hier den Wickelkopf 22. Die Pfeile in Fig. 5 geben die Flussrichtung der permanentmagnetischen Felder an. Wie bereits anhand Fig. 4 erläutert, zeigt die Flussrichtung der Magnetpole im ersten und zweiten Luftspalt 8, 9 radial in entgegengesetzte Richtung. Die Windungen der Statorwicklungen 11, 12, 13 liegen bezogen auf die Flussrichtung der Permanentmagnete 7a, 7b so, dass der magnetische Fluss den größten Teil der Wicklungen senkrecht trifft. Die trifft zumindest für den ersten und zweiten Windungsabschnitte 13a, 13b zu, d.h. dass hier auch der Statorstrom senkrecht zum magnetischen Fluss liegt. Es liegt somit nur derjenige Teil des Wicklungsdrahtes nicht senkrecht zu dem Magnetfeld, der durch die dritten Windungsabschnitte 13c gebildet ist, mithin also der Wickelkopf 20. Deren Länge ist aufgrund des erfindungsgemäßen Aufbaus von Stator 2 und Rotor 3 auf ein Minimum beschränkt, wobei die Länge des dritten Windungsabschnitts 13c im Wesentlichen durch den Abstand des ersten und zweiten Spalts 8, 9 zueinander bestimmt ist.

Wie Fig. 5 des Weiteren zeigt, liegt axial vor dem dritten Windungsabschnitt 13c ein zusätzlicher Permanentmagnet 16, so dass auch der dritte Windungsabschnitt in einem rechtwinklig wirkenden Magnetfeld liegt und somit zur Drehmomenterzeugung beiträgt. Durch die zusätzlichen Permanentmagnete 16 kann zudem die radiale Dicke des zweiten Rotorelements 6 reduziert, und können höhere Drehzahlen erreicht werden, da die induzierten Spannungen größer sind. Fig. 5 gibt zudem an den axialen Enden des ersten Rotorelements 5 den Blick auf die Innenumfangsfläche 18 des Stators 3 frei, so dass die jeweiligen zur Welle 4 gerichteten Außenkanten der achsparallel liegenden ersten Windungsabschnitte 13a sichtbar sind.

Elektrisch können die Wicklungen 11, 12, 13 der verschiedenen elektrischen Phasen des Drehstromsystems wie im Stand der Technik üblich im Stern oder Dreieck verschaltet sein. Die derselben Phase zugeordneten Wicklungen können in Reihe oder parallelgeschaltet sein. Jede Windung entspricht dabei physikalisch einer stromdurchflossenen Leiterschleife in einem permanentmagnetischen Feld, die ihrerseits ein elektromagnetisches Feld erzeugt. Da die sinusförmigen Ströme in den Wicklungen der verschiedenen Phasen je um 120° phasenversetzt sind, erzeugt die Gesamtheit aller Wicklungen 11, 12, 13 ein Statorfeld mit örtlich ebenfalls in Umfangsrichtung abwechselnden Polen. Da sich der Strom in einer Wicklung 11, 12, 13 zudem zeitlich sinusförmig ändert, dreht das Statorfeld mit der Frequenz des Stroms und übt auf die beiden zylindrischen Rotorelemente 5, 6 ein Drehmoment aus.

Um die Drehzahl der erfindungsgemäßen Drehfeldmaschine 1 einzustellen, können die Wicklungen 11, 12, 13 auch aus einem Frequenzumrichter gespeist werden, der entsprechend drei um 120° versetzet Ausgangsspannungen liefert. Mit einem solchen Frequenzumrichter, beispielsweise mit Spannungszwischenkreis, kann die Drehfeldmaschine 1 zudem an einem Wechselspannungsnetz betrieben werden.

Die Wicklungen 11, 12, 13 sind bei der Drehfeldmaschine des Beispiels, das nicht zur Erfindung gehört, ohne Schrittverkürzung ausgeführt, überlappen sich in Umfangsrichtung also nicht. Erfindungsgemäß ist dies jedoch der Fall.

Gemäß einer anderen, nicht dargestellten Ausführungsvariante, können sowohl das erste als auch das zweite Rotorelement 5, 6 an der Rotorscheibe 14 befestigt sein.

Gemäß einer anderen, nicht dargestellten Ausführungsvariante, kann die Querschnittsform des ersten und zweiten Rotorelements 5, 6 sowie der Stützstruktur 10 rund oder elliptisch ausgebildet sein, so dass die im Wickelkopfbereich 20 liegenden dritten Windungsabschnitte 13c ebenfalls rechtwinklig vom magnetischen Feld durchsetzt werden.

Gemäß einer wiederum alternativen Ausführungsvariante kann die Drehfeldmaschine ein Generator, beispielsweise eine Turbine sein.

### Bezugszeichenliste

1 Drehfeldmaschine
2 Rotor
3 Stator
4 Welle
5 Erstes Rotorelement
6 Zweites Rotorelement
7a Permanentmagnete im ersten Rotorelement
7b Permanentmagnete im zweiten Rotorelement
8 Erster Spalt
9 Zweiter Spalt
10 Stützstruktur
11 Erste Wicklung
12 Zweite Wicklung
13 Dritte Wicklung
14 Rotorscheibe
15 Trägerelement
16 Axialmagnet
17 Taschen für Permanentmagnete
18 Innenumfangsfläche des Stators
19 Drehachse, Motorachse
20 Wickelkopfbereich
21 Halterung, Abstandshalter
22 Wickelkopf
23 Axialspalt

## Patentansprüche

1. Dreiphasige Drehfeldmaschine (1) mit einem Rotor (2), der ein erstes ringförmiges Rotorelement (5) mit Permanentmagneten (7a) aufweist, und mit einem Stator (3) mit einzelnen, aus Windungen gebildeten Wicklungen (11, 12, 13), die jeweils einer von drei Phasen eines Drehstromsystems zugeordnet sind und sich in Umfangsrichtung des Stators (3) zyklisch wiederholen, wobei zwischen dem Stator (3) und dem ersten Rotorelement (5) ein erster radialer Luftspalt (8) besteht, und der Rotor (2) ein zum ersten Rotorelement (5) konzentrisch und radial weiter außen liegendes zweites ringförmiges Rotorelement (6) mit Permanentmagneten (7b) aufweist, welches drehfest mit dem ersten Rotorelement (5) verbunden ist und zu welchem der Stator (3) unter Ausbildung eines zweiten radialen Luftspalts (9) beabstandet ist, wobei sich ein erster Abschnitt (13a) einer Windung der Wicklungen (11, 12, 13) im ersten Luftspalt (8) in eine axiale Richtung erstreckt und stirnseitig des Stators (3) im weiteren Verlauf in einen radial zum ersten Abschnitt (13a) versetzten zweiten Abschnitt (13b) der Windung übergeht, der sich im zweiten Luftspalt (9) in entgegengesetzte axiale Richtung erstreckt, **dadurch gekennzeichnet, dass** der erste und zweite Windungsabschnitt (13a, 13b) azimutal zueinander versetzt sind, so dass sich Windungen unmittelbar benachbarter Wicklungen (11, 12, 13) überlappen, und dass die Wicklungen (11, 12, 13) auf eine massive, nicht hohle ringförmige Stützstruktur (10) des Stators (3) gewickelt sind, die aus einem unmagnetischen Material, insbesondere aus Kunststoff besteht, oder dass die Wicklungen (11, 12, 13) selbsttragend sind, insbesondere aus einem formstabilen Flachdraht oder einem verbackenen Wicklungsdraht gebildet sind.

2. Drehfeldmaschine (1) nach Anspruch 1, **dadurch gekennzeichnet, dass** die Rotorelemente (5, 6) und der Stator (3) jeweils einen rechteckigen Querschnitt aufweisen.

3. Drehfeldmaschine (1) nach Anspruch 1, **dadurch gekennzeichnet, dass** der Stator (3) eine kreisrunde oder ovale Querschnittsform aufweist und die beiden Rotorelemente (5, 6) im Querschnitt betrachtet derart ineinander übergehen, dass der erste und zweite Luftspalt (8, 9) bogenförmig in einen gemeinsamen axialen Luftspalt übergehen.

4. Drehfeldmaschine (1) nach einem der vorherigen Ansprüche, **dadurch gekennzeichnet, dass** der Rotor (2) in axialer Richtung vor der Stirnseite des Stators (3) zusätzliche Permanentmagnete (16) aufweist.

5. Drehfeldmaschine (1) nach einem der vorherigen Ansprüche, **dadurch gekennzeichnet, dass** die Stützstruktur (10) in ihrer zum ersten und/ oder zweiten Luftspalt (8, 9) gerichteten Oberfläche Nuten aufweist, in denen Wicklungsdrähte der Wicklungen (11, 12, 13) einliegen.

6. Drehfeldmaschine (1) nach einem der vorherigen Ansprüche, **dadurch gekennzeichnet, dass** die Wicklungen (11, 12, 13), insbesondere der Flachdraht, aus einem ferromagnetischen Material gebildet sind.

7. Drehfeldmaschine (1) nach einem der vorherigen Ansprüche, **dadurch gekennzeichnet, dass** die stirnseitig des Stators (3) liegenden Windungsabschnitte (13c) aus einem elektrisch besser leitenden Material bestehen, als der erste und zweite Windungsabschnitt (13a, 13b).

8. Drehfeldmaschine (1) nach zumindest einem der vorherigen Ansprüche, **dadurch gekennzeichnet, dass** die Flussrichtung der Magnetpole im ersten und zweiten Luftspalt (8, 9) radial in die gleiche Richtung zeigt.

9. Drehfeldmaschine (1) nach einem der vorherigen Ansprüche, **dadurch gekennzeichnet, dass** die Windungen derselben Wicklung (11, 12, 13) jeweils in mehreren Lagen übereinanderliegen, wobei die Windungen benachbarter Wicklungen (11, 12, 13) in unterschiedlichen Lagen derart versetzt zueinander liegen, dass sich die benachbarten Wicklungen (11, 12, 13) in Umfangsrichtung überlappen.

10. Drehfeldmaschine (1) nach einem der vorherigen Ansprüche, **dadurch gekennzeichnet, dass** das erste und zweite Rotorelement (5, 6) drehfest mit einer Welle (4) oder einer drehbaren Komponente einer angetriebenen Lastmaschine oder einer antreibenden Turbine verbunden sind.

11. Drehfeldmaschine (1) nach einem der vorherigen Ansprüche, **dadurch gekennzeichnet, dass** das erste Rotorelemente (5) unmittelbar auf einer Welle (4) und das zweite Rotorelement (6) an einer mit der Welle (4) drehfest verbundenen Rotorscheibe (14) befestigt ist, oder dass das erste und/ oder das zweite Rotorelement (5, 6) an einer Rotorscheibe (14) befestigt ist / sind, insbesondere dass die Rotorscheibe ein Teil eines Pumpenlaufrads ist.

12. Drehfeldmaschine (1) nach einem der vorherigen Ansprüche, **dadurch gekennzeichnet, dass** die Stützstruktur (10) mittels Halteelementen (24) fest an einem stationären, insbesondere scheibenförmigen Trägerelement (15) gehalten ist.

13. Drehfeldmaschine (1) nach einem der vorherigen Ansprüche, **dadurch gekennzeichnet, dass** der erste und der zweite Spalt (8, 9) unterschiedliche Spaltbreiten besitzen.

14. Drehfeldmaschine (1) nach einem der vorherigen Ansprüche, **dadurch gekennzeichnet, dass** sie ein Antriebsmotor, insbesondere für eine Kreiselpumpe ist.

## Claims

1. Three-phase induction machine (1) with a rotor (2) comprising a first annular rotor element (5) with permanent magnets (7a), and with a stator (3) having individual windings (11, 12, 13) made of coils, respectively assigned to one of three phases of a three-phase system and repeating periodically in the circumferential direction of the stator (3), wherein there is a first radial air gap (8) between the stator (3) and the first rotor element (5), and the rotor (2) comprises a second annular rotor element (6) with permanent magnets (7b) that is concentric with the first rotor element (5) and located radially further out, the second annular rotor element (6) having a torque-proof connection to the first rotor element (5) and having a distance to the stator (3) forming a second radial air gap (9), wherein a first section (13a) of a coil of the windings (11, 12, 13) extends in the first air gap (8) in one axial direction and, on the face end of the stator (3), in its further course continues into a second section (13b) of the coil that is radially offset to the first section (13a) and that extends in the second air gap (9) in the opposite axial direction, **characterised in that** the first and second coil sections (13a, 13b) are azimuthally offset relative to each other so that the coils of directly adjacent windings (11, 12, 13) overlap, and **in that**
the windings (11, 12, 13) being wound onto a massive, not hollow annular supporting structure (10) of the stator (3) which consists of a non-magnetic material, in particular plastic, or **in that**
the windings (11, 12, 13) are self-supporting, in particular made of an dimensionally stable flat wire or a backed winding wire.

2. Induction machine (1) according to claim 1, **characterised in that** the rotor elements (5, 6) and the stator (3) respectively comprise a rectangular cross-section.

3. Induction machine (1) according to claim 1, **characterised in that** the stator (3) comprises a circular or oval cross-sectional shape and that the two rotor elements (5, 6), viewed in cross-section, merge into each other **in that** the first and second air gaps (8, 9) merge in an arc-like manner into a joint axial air gap.

4. Induction machine (1) according to one of the preceding claims, **characterised in that** the rotor (2) comprises additional permanent magnets (16) in the axial direction in front of the face end of the stator (3).

5. Induction machine (1) according to one of the preceding claims, **characterised in that** the supporting structure (10) comprises grooves in its surface facing the first and/or second air gap (8, 9), in which winding wires of the windings (11, 12, 13) lie.

6. Induction machine (1) according to one of the preceding claims, **characterised in that** the windings (11, 12, 13), in particular the flat wire, are made of a ferromagnetic material.

7. Induction machine (1) according to one of the preceding claims, **characterised in that** the coil sections (13c) located at the face end of the stator (3) consist of a material that conducts electricity better than the first and second coil sections (13a, 13b).

8. Induction machine (1) according to at least one of the preceding claims, **characterised in that** the flow direction of the magnetic poles in the first and second air gap (8, 9) faces radially in the same direction.

9. Induction machine (1) according to one of the preceding claims, **characterised in that** the coils of the same winding (11, 12, 13) respectively lie on top of each other in several layers, wherein the coils of adjacent windings (11, 12, 13) in different layers are offset relative to each other so that the adjacent windings (11, 12, 13) overlap in the circumferential direction.

10. Induction machine (1) according to one of the preceding claims, **characterised in that** the first and second rotor elements (5, 6) have a torque-proof connection to a shaft (4) or a rotatable component of a driven load machine or a driving turbine.

11. Induction machine (1) according to one of the preceding claims, **characterised in that** the first rotor element (5) is mounted directly on a shaft (4) and the second rotor element (6) being mounted on a rotor disc (14) having a torque-proof connection to the shaft (4), or **in that** the first and/or second rotor element (5, 6) is mounted on a rotor disc (14), in particular that the rotor disc is a part of a pump impeller.

12. Induction machine (1) according to one of the preceding claims, **characterised in that** the supporting structure (10) is secured by means of support elements (24) on a stationary, in particular disc-shaped carrier (15).

13. Induction machine (1) according to one of the preceding claims, **characterised in that** the first and second gaps (8, 9) have different gap widths.

14. Induction machine (1) according to one of the preceding claims, **characterised by** being a drive motor, in particular for a rotary pump.

## Revendications

1. Machine à champ tournant triphasée (1) comprenant un rotor (2) qui présente un premier élément de rotor annulaire (5) avec des aimants permanents (7a), et un stator (3) avec des bobinages individuels (11, 12, 13) formés de spires qui sont attribués respectivement à l'une des trois phases d'un système triphasé et se répètent de façon cyclique dans la direction circonférentielle du stator (3), sachant qu'un premier entrefer radial (8) existe entre le stator (3) et le premier élément de rotor (5), que le rotor (2) comporte un deuxième élément de rotor annulaire (6) concentrique au premier élément de rotor (5) et situé plus à l'extérieur dans le sens radial (6) avec des aimants permanents (7b), qui est relié de manière solidaire en rotation au premier élément de rotor (5) et dont le stator (3) est espacé en formant un deuxième entrefer radial (9), sachant qu'une première partie (13a) d'une spire des bobinages (11, 12, 13) s'étend dans le premier entrefer (8) dans une direction axiale et se prolonge, à l'extrémité frontale du stator (3), par une deuxième partie (13b) de la spire décalée radialement par rapport à la première partie (13a), qui s'étend dans le deuxième entrefer (9) dans la direction axiale opposée, **caractérisé en ce que** les première et deuxième sections de spire (13a, 13b) sont décalées de façon azimutale l'une par rapport à l'autre, de sorte que les spires des bobinages immédiatement adjacents (11, 12, 13) se chevauchent, et que les bobinages (11, 12, 13) sont enroulés sur une structure de support (10) massive, non creuse et annulaire du stator (3) et constituée d'un matériau non magnétique, plus particulièrement de matière plastique, ou que les bobinages (11, 12, 13) sont autoportants et formés plus particulièrement d'un fil plat indéformable ou d'un fil d'enroulement cuit.

2. Machine à champ tournant électronique (1) selon la revendication 1, **caractérisée en ce que** les éléments de rotor (5, 6) et le stator (3) présentent chacun une section rectangulaire.

3. Machine à champ tournant (1) selon la revendication 1, **caractérisée en ce que** le stator (3) présente une section transversale circulaire ou ovale et les deux éléments de rotor (5, 6), observés en coupe transversale, se fondent l'un dans l'autre de telle sorte que le premier et le deuxième entrefer (8, 9) se fondent en arc de cercle dans un entrefer axial commun.

4. Machine à champ tournant (1) selon l'une des revendications précédentes, **caractérisée en ce que** le rotor (2) comporte, dans le sens axial, devant la face frontale du stator (3), des aimants permanents supplémentaires (16).

5. Machine à champ tournant (1) selon l'une des revendications précédentes, **caractérisée en ce que** la structure de support (10) présente, dans sa surface orientée vers le premier et/ou le deuxième entrefer (8, 9), des rainures dans lesquelles sont logés les fils des bobinages (11, 12, 13).

6. Machine à champ tournant (1) selon l'une des revendications précédentes, **caractérisée en ce que** les bobinages (11, 12, 13), en particulier le fil plat, sont constitués d'un matériau ferromagnétique.

7. Machine à champ tournant (1) selon l'une des revendications précédentes, **caractérisée en ce que** les sections de spire (13c) situées à l'avant du stator (3) sont constituées d'un matériau plus conducteur d'électricité que les première et deuxième sections de spire (13a, 13b).

8. Machine à champ tournant (1) selon au moins l'une des revendications précédentes, **caractérisée en ce que** la direction du flux des pôles magnétiques dans les premier et deuxième entrefers (8, 9) est orientée radialement dans la même direction.

9. Machine à champ tournant (1) selon l'une des revendications précédentes, **caractérisée en ce que** les spires d'un même bobinage (11, 12, 13) se superposent respectivement en plusieurs couches, sachant que les spires des bobinages voisins (11, 12, 13) sont décalées les unes par rapport aux autres dans différentes couches de telle façon que les bobinages voisins (11, 12, 13) se chevauchent en direction circonférentielle.

10. Machine à champ tournant (1) selon l'une des revendications précédentes, **caractérisée en ce que** les premier et deuxième éléments de rotor (5, 6) sont reliés de manière solidaire en rotation à un arbre (4) ou à un composant rotatif d'une machine de charge entraînée ou d'une turbine d'entraînement.

11. Machine à champ tournant (1) selon l'une des revendications précédentes, **caractérisée en ce que** le premier élément de rotor (5) est fixé directement sur un arbre (4) et le deuxième élément de rotor (6) est fixé sur un disque de rotor (14) relié de manière solidaire en rotation à l'arbre (4), ou **en ce que** le premier et/ou le deuxième élément de rotor (5, 6) est/sont fixé(s) à un disque de rotor (14), en particulier que le disque de rotor fait partie d'un rotor de pompe.

12. Machine à champ tournant (1) selon l'une des revendications précédentes, **caractérisée en ce que** la structure de support (10) est maintenue fermement à un élément de retenue fixe (15), en particulier en forme de disque, au moyen d'éléments porteur (24).

13. Machine à champ tournant (1) selon l'une des revendications précédentes, **caractérisée en ce que** le premier et le second entrefer (8, 9) ont des largeurs différentes.

14. Machine à champ tournant (1) selon l'une des revendications précédentes, **caractérisée en ce qu'il** s'agit d'un moteur d'entraînement, plus particulièrement pour une pompe centrifuge.
